# EUROPÄISCHE PATENTSCHRIFT

(11) **EP 1 910 130 B1**
(45) Veröffentlichungstag und Bekanntmachung des Hinweises auf die Patenterteilung: **04.08.2010**
(21) Anmeldenummer: 06753959.3
(22) Anmeldetag: 30.05.2006
(51) Int. Cl.: B60R 1/06

(54) **SPIEGELKOPF EINES RÜCKBLICKSPIEGELS, VORZUGSWEISE EINES AUSSENRÜCKBLICKSPIEGELS**
MIRROR HEAD FOR A REAR VIEW MIRROR, PREFERABLY AN EXTERIOR REAR VIEW MIRROR
TETE D'UN RETROVISEUR, DE PREFERENCE D'UN RETROVISEUR EXTERIEUR

(30) Priorität: 27.06.2005 DE 102005031078
(43) Veröffentlichungstag der Anmeldung: 16.04.2008
(73) Patentinhaber: SMR Patents S.à.r.l., 1653 Luxembourg (LU)
(72) Erfinder: TILG, Jürgen, 73635 Rudersberg (DE); SCHEUNPFLUG, Thomas, 71642 Ludwigsburg (DE); SONNTAG, Kürsat, 86498 Kettershausen (DE); SCHMIERER, Arne, 73230 Kirchheim (DE); MÜLLER, Dirk, 70569 Stuttgart (DE)
(74) Vertreter: Rausch, Gabriele
(86) Internationale Anmeldenummer: PCT/EP2006/005121
(87) Internationale Veröffentlichungsnummer: WO 2007/000221

(56) Entgegenhaltungen:
- DE-A1- 10 121 400
- DE-A1- 10 122 399
- FR-A- 1 378 991
- FR-A- 2 523 052
- US-A- 5 245 480
- US-A- 6 109 586

## Beschreibung

Die Erfindung betrifft einen Spiegelkopf eines Rückblickspiegels, vorzugsweise eine Außenrückblickspiegels, nach dem Oberbegriff des Anspruches 1.

Bei bekannten Außenrückblickspiegeln ist das Spiegelgehäuse fest mit dem Spiegelträger verbunden. Während der Fahrt wirken auf den Spiegelkopf zum Teil erhebliche Windkräfte, die zu Vibrationen des Spiegelkopfes führen.

Einen Spiegelkopf mit den Merkmalen des Oberbegriffs des Anspruchs 1 zeigt die US-A 5 245 480.

Der Erfindung liegt die Aufgabe zugrunde, den gattungsgemäßen Spiegelkopf so auszubilden, daß die Vibrationsanregung durch Windkräfte und dergleichen minimiert ist.

Diese Aufgabe wird beim gattungsgemäßen Spiegelkopf erfindungsgemäß mit den kennzeichnenden Merkmalen des Anspruches 1 gelöst.

Beim erfindungsgemäßen Spiegelkopf ist das Spiegelgehäuse nicht starr, sondern zumindest teilweise begrenzt beweglich mit dem Spiegelträger verbunden. Bei entsprechender Kraftbeaufschlagung kann darum das Spiegelgehäuse zumindest teilweise gegenüber dem Spiegelträger Bewegungen ausführen. Durch diese flexible Anbindung des Spiegelgehäuses an den Spiegelträger wird die Vibrationsanregung, wie sie beispielsweise durch Windkräfte gegeben ist, zumindest minimiert.

Es ist ausreichend, wenn das Spiegelgehäuse an mindestens einem Befestigungspunkt fest mit dem Spiegelträger verbunden ist.

Das Spiegelgehäuse weist im Bereich des Befestigungspunktes vorteilhaft einen von seiner Rückwand abstehenden Befestigungsteil auf, der zur Aufnahme wenigstens eines Verbindungselementes dient.

Das Befestigungsteil des Spiegelgehäuses ist vorteilhaft ein quer von der Innenseite der Rückwand des Spiegelgehäuses abstehender Vorsprung, der vorteilhaft einstückig mit dem Spiegelgehäuse ausgebildet ist.

Zweckmäßig ist der Befestigungsteil des Spiegelgehäuses zumindest teilweise hülsenförmig ausgebildet. Dadurch kann das Verbindungselement sehr einfach vom Befestigungsteil aufgenommen werden.

Bei einer vorteilhaften Ausführungsform ist das Verbindungselement, mit dem das Spiegelgehäuse und der Spiegelträger miteinander verbunden sind, eine Schraube, die stirnseitig in den Befestigungsteil des Spiegelgehäuses geschraubt wird.

Das Verbindungselement liegt vorteilhaft innerhalb eines Befestigungsteiles des Spiegelträgers. Dadurch ist das Verbindungselement geschützt innerhalb des Spiegelkopfes untergebracht.

Vorteilhaft ist der spiegelträgerseitige Befestigungsteil hülsenförmig ausgebildet. Das Verbindungselement kann innerhalb dieses Hülsenbereiches geschützt untergebracht werden.

Der spiegelträgerseitige Befestigungsteil weist vorteilhaft an seinem der Rückwand des Spiegelgehäuses zugewandten Ende einen Boden auf, der mit einer Durchtrittsöffnung für den Durchtritt des Verbindungselementes versehen ist. Das Verbindungselement kann von der Innenseite des spiegelträgerseitigen Befestigungsteiles aus montiert und mit dem spiegetgehäuseseitigen Befestigungsteil verbunden werden.

Eine einwandfreie Ausrichtung des Spiegelgehäuses gegenüber dem Spiegelträger zumindest im Befestigungsbereich wird vorteilhaft dadurch erreicht, daß der spiegelgehäuseseitige Befestigungsteil am Boden des spiegelträgerseitigen Befestigungsteiles anliegt.

Ist das Verbindungselement eine Schraube, liegt sie vorteilhaft mit ihrem Kopf am Boden des spiegelträgerseitigen Befestigungsteiles an. Dadurch ist eine einfache Montage gewährleistet, da die Schraube in einfacher Weise so weit eingeschraubt wird, bis ihr Kopf am Boden anliegt. Über die Schraube wird der spiegelgehäuseseitige Befestigungsteil am Boden des spiegelträgerseitigen Befestigungsteiles zur Anlage gebracht.

Vorteilhaft liegt das Spiegelgehäuse unter Vorspannung am Spiegelträger an. Diese Vorspannung kann dadurch erreicht werden, daß der Schraubenkopf Abstand vom Boden des spiegelträgerseitigen Befestigungsteiles hat und daß die Schraube im Bereich zwischen dem Boden und ihrem Kopf von wenigstens einem Vorspannelement umgeben ist. Es sorgt dafür, daß der spiegelgehäuseseitige Befestigungsteil mit einer entsprechenden Kraft gegen den Boden des spiegelträgerseitigen Befestigungsteiles gezogen wird.

Das Vorspannelement kann eine Schraubendruckfeder oder eine elastisch verformbare Hülse sein, die auf der Schraube sitzt.

Für die Beweglichkeit des Spiegehäuses gegenüber dem Spiegelträger ist es ausreichend, wenn erfindungsgemäß im wesentlichen nur ein Freiheitsgrad vorgesehen ist. In diesem Falle bewegt sich das Spiegelgehäuse gegenüber dem Spiegelträger im wesentlichen nur in einer Richtung. Die Bewegungsachse kann hierbei etwa quer zur Fahrtrichtung des Fahrzeuges liegen, an dem der Spiegelkopf montiert ist. Bezogen auf das Spiegelgehäuse erstreckt sich die Bewegungsachse hierbei etwa in Breitenrichtung des Spiegelgehäuses. Liegt diese gedachte Bewegungsachse in Breitenrichtung des Spiegelgehäuses, bewegt es sich in Fahrtrichtung des Fahrzeuges nach vorn relativ zum Spiegelträger. Liegt die gedachte Bewegungsachse jedoch unter einem geringen Winkel zur Breitenrichtung des Spiegelgehäuses sowie in Höhenrichtung leicht geneigt, wird das Spiegelgehäuse nicht nur in Fahrtrichtung nach vorn, sondern gleichzeitig auch schräg aufwärts relativ zum Spiegelträger bewegt. Vorteilhaft liegt in diesem Falle die gedachte Bewegungsachse so, daß sich das Spiegelgehäuse bei seiner Bewegung dem Fahrzeug nähert.

Vorteilhaft liegt die Befestigungsstelle, bezogen auf die Breitenerstreckung des Spiegelgehäuses, außermittig und vorteilhaft nahe am Boden des Spiegelgehäuses.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Schnitt eine erste Ausführungsform eines nicht-erfindungsgemä- ßen Spiegelkopfes eines Außenrückblickspiegels,
- Fig. 2: den Außenrückblickspiegel mit dem Spie- gelkopf in Rückansicht,
- Fig. 3: im Schnitt einen Teil einer erfindungsgemäßen Ausführungsform eines Spiegelkopfes
- Fig. 4: eine Ausfüh- rungsform eines nicht-erfindungsgemäßen Spiegelkopfes,
- Fig. 5: in einer Darstellung entsprechend Fig. 3 ein weiteres Ausfüh- rungsbeispiel eines Spiegelkopfes,
- Fig. 6: einen weiteren erfindungsgemäßen Spiegelkopf,
- Fig. 7: eine Ausführungsform eines nicht-erfindungsgemäßen Spiegelkopfs.

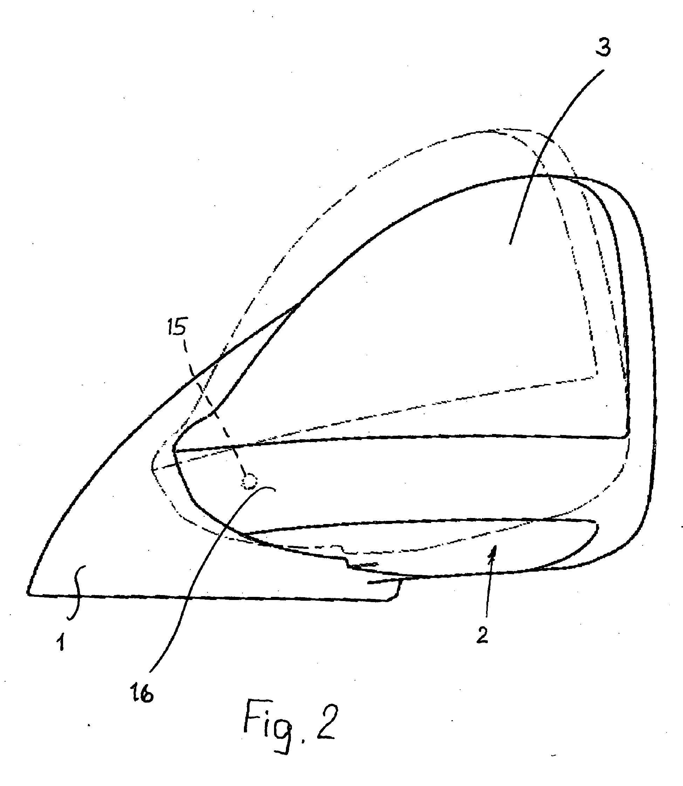

Der Außenrückblickspiegel ist für Fahrzeuge, insbesondere für Kraftfahrzeuge, vorgesehen und hat einen Spiegelfuß 1 (Fig. 2), mit dem der Außenrückblickspiegel am Fahrzeug befestigt wird. Der Spiegelfuß 1 kann aus Metall oder Kunststoff bestehen, der in der Wagenfarbe eingefärbt oder mit einem entsprechenden Farbüberzug, vorzugsweise einem Lacküberzug, versehen sein kann. Am Spiegelfuß 1 ist ein Spiegelkopf 2 gelagert, der aus der in Fig. 2 dargestellten Gebrauchslage in und entgegen Fahrtrichtung gegenüber dem Spiegelfuß 1 geschwenkt werden kann. Wird der Spiegelkopf 2 in Fahrtrichtung nach hinten gegenüber dem Spiegelfuß 1 geschwenkt, wird er aus der dargestellten Gebrauchslage in eine Parkstellung verstellt, in der der Spiegelkopf 2 an der Fahrzeugseite liegt. Der Spiegelkopf 2 kann in Fahrtrichtung nach vorn gegenüber dem Spiegelfuß 1 geschwenkt werden, wenn auf ihn beispielsweise ein Schlag ausgeübt wird. In diesem Fall wird der Spiegelkopf 2 gegen eine Rückstellkraft, vorzugsweise eine Federkraft, verschwenkt. Sobald die auf den Spiegelkopf 2 wirkende Kraftbeaufschlagung aufhört, kann dadurch der Spiegelkopf 2 wieder in seine Gebrauchslage zurückschwenken.

Der Spiegelkopf 2 hat ein Spiegelgehäuse 3, das an einem Spiegelträger 4 gehalten ist. Das Spiegelgehäuse 3 besteht vorteilhaft aus Kunststoff, der vorteilhaft eingefärbt ist, vorzugsweise in der Wagenfarbe. Das Spiegelgehäuse 3 kann aber auch mit einem entsprechenden Farbüberzug, vorzugsweise einem Lacküberzug, versehen sein. Ebenso ist es möglich, das Spiegelgehäuse 3 farbneutral auszubilden, beispielsweise in schwarzem oder weißem Farbton zu halten. Das Spiegelgehäuse 3 hat eine Rückwand 5, die in eine umlaufende Seitenwand 6 übergeht, die eine der Rückwand 5 mit Abstand gegenüberliegende Öffnung 7 umschließt. In der Öffnung 7 liegt ein Spiegelglas 8, das mit einem Verstellantrieb 9 einstellbar ist. Das Spiegelglas 8 ist auf einer Spiegelglasträgerplatte 10 befestigt, die ihrerseits auf dem Verstellantrieb 9 befestigt, vorzugsweise verrastet ist. Das Spiegelglas 8 ist vorteilhaft beheizbar und kann als EC-Glas ausgebildet sein, das bei auffallendem Scheinwerferlicht nachfolgender Fahrzeuge abdunkelt und so eine Blendung des Fahrers des Kraftfahrzeuges verhindert.

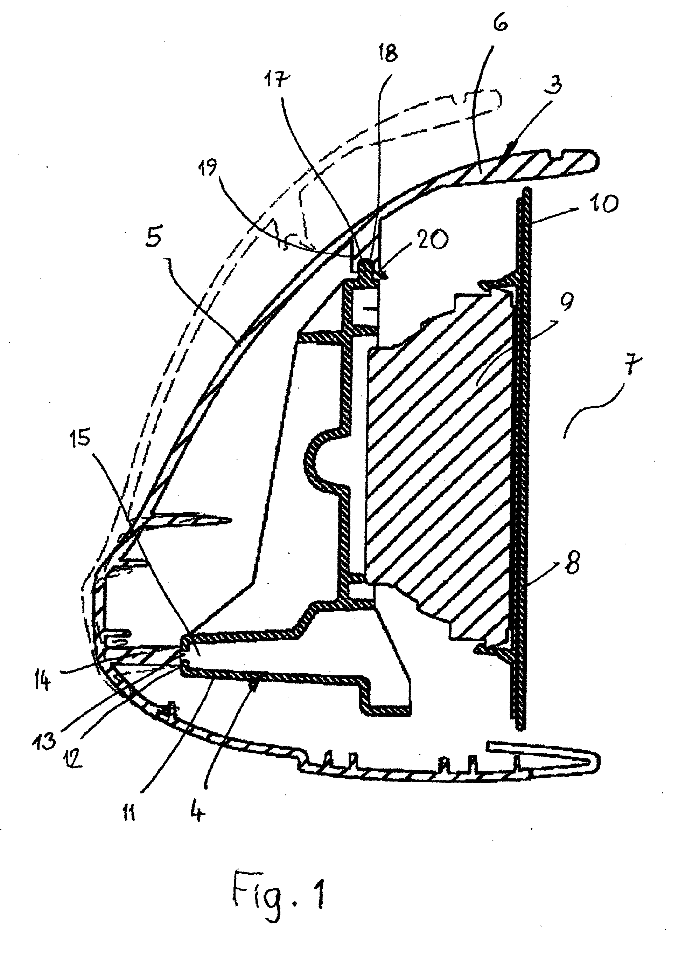

Der Spiegelträger 4 hat einen in Richtung auf die Rückwand 5 des Spiegelgehäuses 3 ragenden Halterungsteil 11, der als Hohlkörper ausgebildet ist und in Richtung auf die Rückwand 5 des Spiegelgehäuses 3 vorsteht. Der Halterungsteil 11 ist an seiner dem Spiegelglas 8 zugewandten Seite offen. Wie Fig. 1 zeigt, ist der Halterungsteil 11 mit geringem Abstand zum in der Gebrauchslage des Spiegelkopfes 2 unteren Teil der Seitenwand 6 angeordnet. Das der Rückwand 5 des Spiegelgehäuses 3 zugewandte Ende des Halterungsteiles 11 ist mit einem Boden 12 geschlossen, in dem sich eine Durchtrittsöffnung 13 für ein Verbindungselement, vorteilhaft eine Schraube, befindet. Dieses Verbindungselement kann von der offenen Seite des Halterungsteiles 11 aus mit einem entsprechenden Werkzeug montiert werden.

Das Spiegelgehäuse 3 weist in Höhe des Halterungsteiles 11 einen Vorsprung 14 auf, der vorteilhaft einstückig mit der Rückwand 5 des Spiegelgehäuses 3 verbunden ist. Der Vorsprung 14 ist so lang, daß in montierter Lage der Boden 12 des Halterungsteiles 11 an der Stirnseite des Vorsprunges 14 anliegt. In den Vorsprung 14 wird das Verbindungselement, vorzugsweise die Schraube, eingesetzt. Auf diese Weise wird das Spiegelgehäuse 3 mit dem Spiegelträger 4 verbunden. Der Halterungsteil 11 und der Vorsprung 14 mit dem Verbindungselement bilden einen Befestigungspunkt 15 für das Spiegelgehäuse 3. In Fig. 2 ist der Bereich 16 angegeben, in dem sich dieser Befestigungspunkt 15 befinden kann. Er ist der einzige Punkt, an dem das Spiegelgehäuse 3 fest mit dem Spiegelträger 4 verbunden ist. Der Befestigungsbereich 16 kann sich nicht erfindungsgemäß vom Spiegelfuß 1 aus bis zum vom Kraftfahrzeug entfernten Ende des Spiegelkopfes 3 erstrecken.

Der Vorsprung 14 und/oder der Halterungsteil 11 sind nicht erfindungsgemäß so ausgebildet, daß bei einer auf das Spiegelgehäuse 3 von der Spiegelglasseite aus wirkenden Kraft das Spiegelgehäuse 3 gegenüber dem Spiegelträger 4 elastisch nachgeben kann. In den Fig. 1 und 2 ist jeweils durch eine gestrichelte Linie diese ausgelenkte Lage des Spiegelgehäuses 3 gegenüber dem Spiegelträger 4 dargestellt. Der Befestigungspunkt 15 ist ausreichend flexibel ausgebildet, so daß das Spiegelgehäuse 3 problemlos gegenüber dem Spiegelträger 4 elastisch verformt werden kann. Im nicht erfindungsgemäßen Ausführungsbeispiel nach Fig. 1 wird dies dadurch erreicht, daß der Vorsprung 14 des Spiegelgehäuses 3 elastisch biegbar ausgebildet ist, so daß bei einer entsprechenden Krafteinwirkung dieser Vorsprung 14 elastisch biegen kann. Nach Beendigung der Krafteinwirkung federt das Spiegelgehäuse 3 in die Ausgangslage zurück

Damit das Spiegelgehäuse 3 einwandfrei am Spiegelträger 4 gehalten ist, ist der Spiegelträger 4 mit mindestens einem Vorsprung 17 versehen, der formschlüssig in eine Vertiefung 18 eingreift, die in der Stirnseite eines von der Innenseite der Rückwand 5 vorstehenden Vorsprunges 19 vorgesehen ist. Der Spiegelträgervorsprung 17 hat vorteilhaft eine im Querschnitt gekrümmte Stirnseite. Dementsprechend ist der Boden der Vertiefung 18 gekrümmt ausgebildet. Der Vorsprung 17 kann leistenförmig ausgebildet sein, so daß er sich quer zur Fahrtrichtung längs zumindest eines Teils des Spiegelträgers 4 erstreckt. Es ist aber auch möglich, über die Länge des Spiegelträgers 4 mehrere solcher Vorsprünge 17 vorzusehen, denen entsprechende Vorsprünge 19 des Spiegelgehäuses 3 zugeordnet sind. Damit nach dem Zurückfedern der Vorsprung 19 des Spiegelgehäuses 3 zuverlässig auf den Vorsprung 17 gelangt, ist der Vorsprung 19 des Spiegelgehäuses 3 an der dem Spiegelglas 8 zugewandten Seite mit einem schrägen Vorsprung 20 versehen, der eine Einführhilfe beim Zurückfedern des Spiegelgehäuses 3 bildet. In Verbindung mit der gekrümmten Stirnseite des spiegelträgerseitigen Vorsprunges 17 ist somit sichergestellt, daß die Formschlußverbindung zwischen dem Spiegelgehäuse 3 und dem Spiegelträger 4 sicher erreicht wird. Diese Formschlußverbindung stellt sicher, daß trotz der Befestigung des Spiegelgehäuses 3 mit nur einem Befestigungspunkt 15 am Spiegelträger 4 das Spiegelgehäuse 3 sicher mit dem Spiegelträger 4 verbunden ist.

Wie sich aus Fig. 2 ergibt, federt das Spiegelgehäuse 3 nicht nur inFahrtrichtung nach vorn, sondern auch schräg aufwärts in Richtung auf das (nicht dargestellte) Kraftfahrzeug. Dies wird dadurch erreicht, daß der Befestigungspunkt 15 näher beim Spiegelfuß 1 als beim kraftfahrzeugentfernten Rand des Spiegelkopfes bzw. des Spiegelgehäuses vorgesehen ist und die gedachte Schwenkachse quer zur Fahrtrichtung bzw. etwa in Breitenrichtung des Spiegelgehäuses 3 liegt.

Bei der flexiblen Verformung wird im wesentlichen nur der im Bereich oberhalb des Befestigungspunktes 15 liegende Teil des Spiegelgehäuses 3 elastisch verformt, während der im Bereich unterhalb des Befestigungspunktes 15 liegende Teil im wesentlichen seine Lage beibehält. Dadurch ist es beispielsweise.möglich, diesen unteren Teil des Spiegelgehäuses 3 aus elastisch nicht nachgiebigem Material herzustellen und lediglich den im Bereich oberhalb des Befestigungspunktes 15 liegenden Teil aus einem entsprechend elastisch nachgiebigen Material zu fertigen. Dies hat den Vorteil, daß im steifen unteren Teil des Spiegelgehäuses 3 beispielsweise Einbauteite befestigt werden können, wie Leuchtelemente und zugehörige Platinen, Kameras, GPS-Module und dergleichen.

Das Spiegelgehäuse 3 kann auch mit mehr als einem Befestigungspunkt 15 mit dem Spi.egelträger 4 verbunden sein. In diesem Falle ist die Lage der Befestigungspunkte 15 so gewählt, daß das Spiegelgehäuse 3 bei Krafteinwirkung in der beschriebenen Weise gegenüber dem Spiegelträger 4 durch elastische Verformung eine Relativbewegung ausführen kann.

Infolge der flexiblen Anbindung des Spiegelgehäuses 3 an den Spiegelträger 4 wird die Vibrationsanregung durch Wind und dergleichen minimiert, da eine deutlich entkoppelnde Wirkung erreicht wird, wodurch die zu Vibrationen führenden Anregungskräfte nahezu vermieden werden.

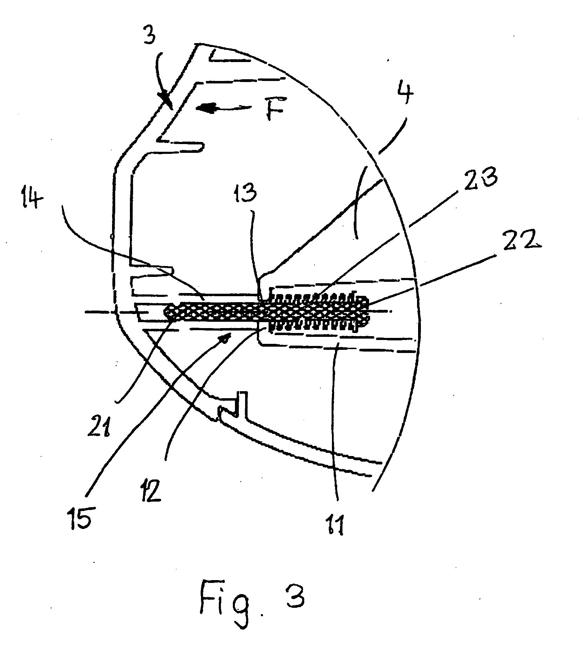

Fig. 3 zeigt ein erstes Ausführungsbeispiel einer erfindungsgemäßen Anbindung des Spiegelgehäuses 3 an den Spiegelträger 4. In dem als Hohlkörper ausgebildeten Vorsprung 14 des Spiegelgehäuses 3 ist eine Schraube 21 geschraubt, die durch die Öffnung 13 im Boden 12 des Halterungsteiles 11 ragt. Der Kopf 22 der Schraube 21 liegt innerhalb des Halterungsteiles 11 mit Abstand vom Boden 12. Im Bereich zwischen dem Boden 12 und dem Kopf 22 ist die Schraube 21 von einer Druckfeder 23 umgeben. Sie ist in der dargestellten Einbaulage vorgespannt, so daß der Vorsprung 14 fest gegen den Boden 12 des Halterungsteiles 11 gezogen wird. Wird auf das Spiegelgehäuse 3 eine Kraft F ausgeübt, wird das Spiegelgehäuse 3 zumindest im Bereich oberhalb des Befestigungspunktes 15 elastisch verformt. Hierbei hebt der Vorsprung 14 vom Boden 12 des Halterungsteiles 11 ab. Die Schraube 22 durchsetzt die Öffnung 13 im Boden 12 mit ausreichendem Spiel, so daß die Schraube bei der Ausweichbewegung des Spiegelgehäuses 3 nicht an den Rand der Durchtrittsöffnung 13 anschlägt. Die Druckfeder 23 sorgt dafür, daß nach Beendigung der Krafteinwirkung das Spiegelgehäuse 3 wieder in die Ausgangslage zurückfedert. Bei dieser Ausführungsform muß der Vorsprung 14 nicht elastisch verformbar sein. Es ist sogar möglich, das gesamte Spiegelgehäuse 3 formstabil auszubilden, da die beschriebene Ausbildung des Befestigungspunktes 15 eine Schwenkbewegung des Spiegelgehäuses 3 gegenüber dem Spiegelträger 4 erlaubt.

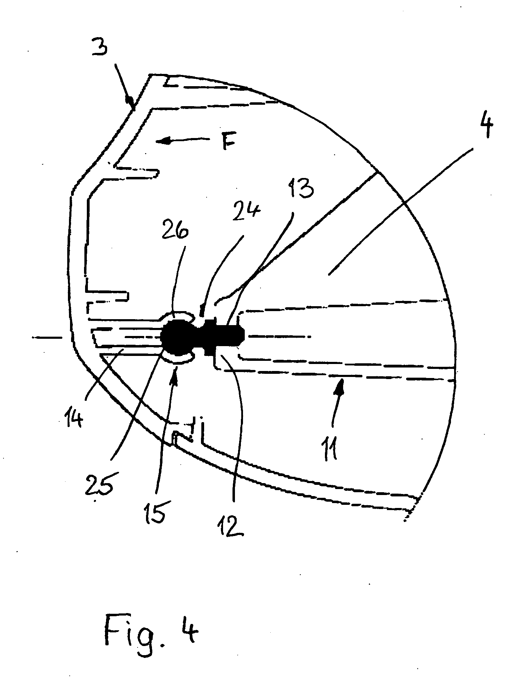

Bei der nicht-erfindungsgemäßen Ausführungsform nach Fig. 4 erfolgt die Verbindung zwischen dem Spiegelgehäuse 3 und dem Spiegelträger 4 über ein Kugelelement 24 mit einem Kugelkopf 25, der in einer Kugelpfanne 26 aufgenommen ist. Sie ist am freien Ende des Vorsprunges 15 des Spiegelgehäuses 3 vorgesehen. Das Kugelelement 24 ist in der Durchtrittsöffnung 13 im Boden 12 des Halterungsteiles 11 befestigt. Aufgrund der Kugelkopfausbildung des Befestigungspunktes 15 kann das Spiegelgehäuse 3 nicht nur in einer Richtung gegenüber dem Spiegelträger 4 verstellt werden, sondern in mehreren Richtungen. Je nach Richtung der wirkenden Kraft F wird das Spiegelgehäuse 3 relativ zum Spiegelträger 4 elastisch verformt. Hierbei kann der Vorsprung 14 formstabil ausgebildet sein. Bei der Krafteinwirkung schwenkt der Vorsprung 14 mit seiner Kugelpfanne 26 auf dem Kugelkopf 25. Das Spiegelgehäuse 3 kann insgesamt auch formsteif ausgebildet sein. Die kugelgelenkige Verbindung mit dem Spiegelträger 4 erlaubt dennoch bei Krafteinwirkung eine Relativverschwenkung des Spiegelgehäuses 3 gegenüber dem Spiegelfuß 4.

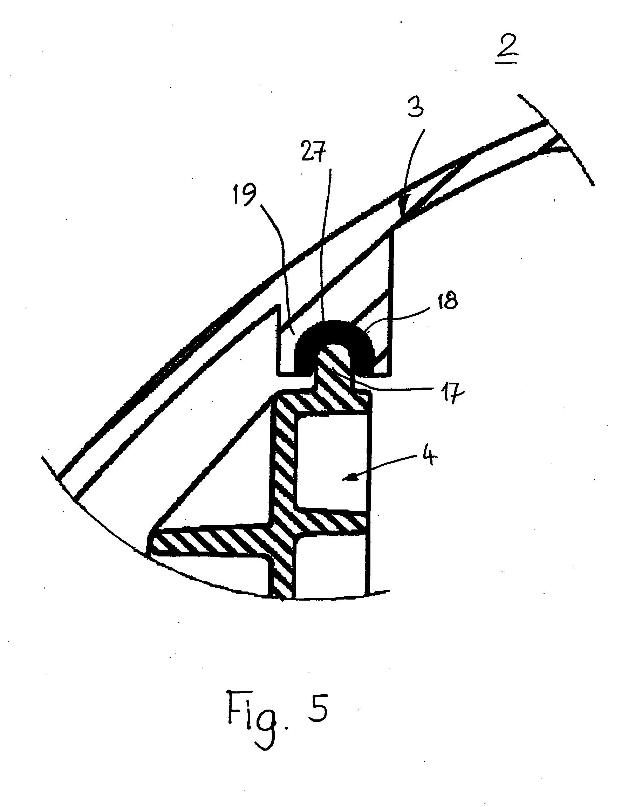

Fig. 5 zeigt eine weitere Ausbildung der Formschlußverbindung zwischen dem Spiegelgehäuse 3 und dem Spiegelträger 4 im in der Gebrauchslage oberen Bereich des Spiegelkopfes 2. Der Vorsprung 19 hat die stirnseitige Vertiefung 18, in die der Vorsprung 17 des Spiegelträgers 4 formschlüssig eingreift. Der Boden der Vertiefung 18 kann mit einem Dämpfungsbelag 27 versehen sein, so daß die Formschlußverbindung zwischen dem Spiegelgehäuse 3 und dem Spiegelträger 4 zusätzlich gedämpft ist, was der Vibrationsanregung durch Windkräfte und dergleichen entgegenwirkt.

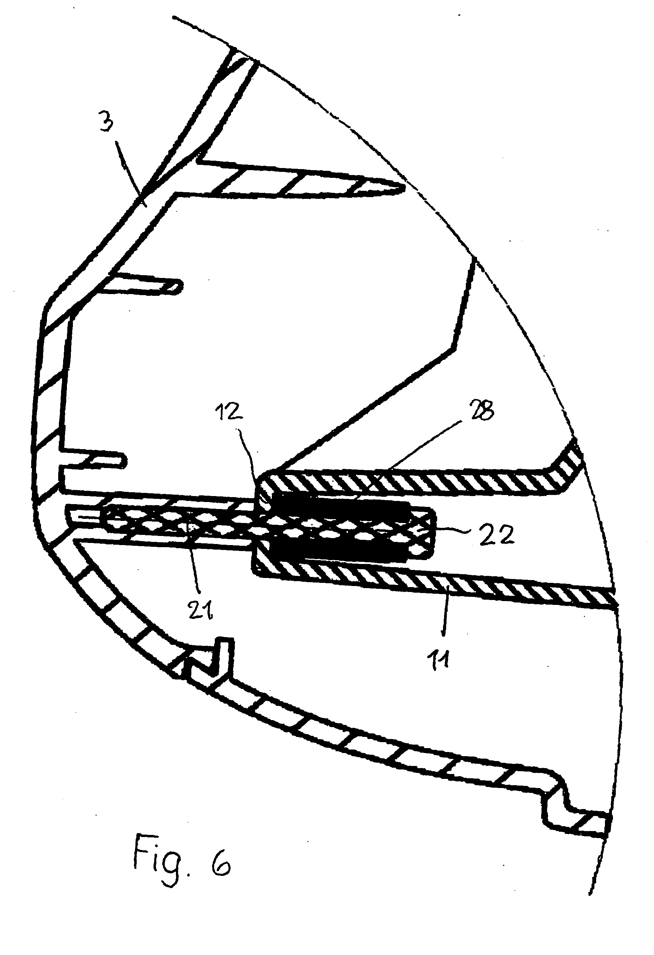

Fig. 6 zeigt ein weiteres erfindungsgemäßes Ausführungsbeispiel, das weitgehend der Ausführungsform nach Fig. 3 entspricht. Der Unterschied besteht darin, daß anstelle der Druckfeder eine elastisch verformbare Hülse 28 auf der Schraube 21 sitzt. Die Hülse 28 erstreckt sich zwischen dem Boden 12 des Halterungsteiles 11 und dem Schraubenkopf 22. Die Hülse 28 wird bei einer Ausweichbewegung des Spiegelgehäuses 3 durch den Schraubenkopf 22 elastisch zusammengedrückt. Sobald die Krafteinwirkung aufhört, kehrt die Hülse 28 in ihre Ausgangslage zurück, wodurch über die Schraube 21 das Spiegelgehäuse 3 in seine Ausgangslage zurückkehrt.

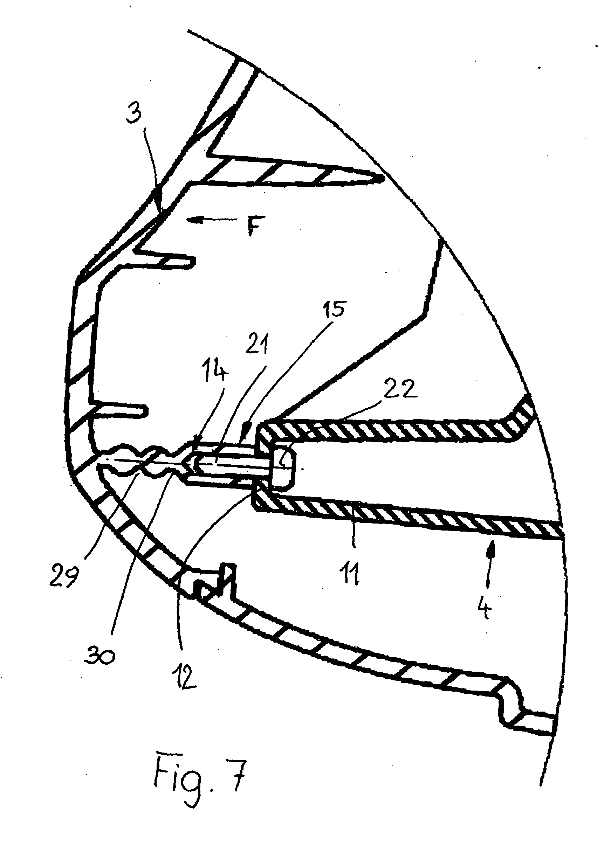

Bei der nicht-erfindungsgemäßen Ausführungsform nach Fig. 7 ist der Vorsprung 14 des Spiegelgehäuses 3 durch eine Formgebung so ausgebildet, daß er besonders einfach elastisch gebogen werden kann. Der Vorsprung 14 hat beispielhaft zwei umlaufende Einschnürungen 29, 30, die dem Vorsprung 14 eine hohe elastische Verformbarkeit verleihen. Im Endbereich ist der Vorsprung 14 hohl ausgebildet, in den die Schraube 21 geschraubt ist. Im Unterschied zu den Ausführungsformen nach den Fig. 3 und 6 liegt die Schraube 21 mit ihrem Kopf 22 innerhalb des Halterungsteiles 11 an dessen Boden 12 an. Der Vorsprung 14 liegt mit seiner Stirnseite an der Außenseite des Bodens 12 an. Bei einer auf das Spiegelgehäuse 3 wirkenden Kraft F kann zumindest der im Bereich oberhalb des Befestigungspunktes 15 liegende Teil des Spiegelgehäuses 3 durch elastische Verformung des Vorsprunges 14 elastisch nachgeben. Die Einschnürungen 29, 30 stellen sicher, daß das Spiegelgehäuse 3 zuverlässig gegenüber dem Spiegelträger 4 elastisch verformt werden kann.

Die beschriebene Gestaltung des Vorsprunges 14 ermöglicht es, das Spiegelgehäuse 3 selbst formsteif auszubilden. In diesem Falle schwenkt das Spiegelgehäuse 3 durch elastische Verformung des Vorsprunges 14 im Bereich der Einschnürungen 29, 30 gegenüber dem Spiegelträger 4.

Bei den beschriebenen nicht-erfindungsgemäßen und erfindungsgemäßen Ausführungsformen ist das Spiegelgehäuse 3 jeweils über wenigstens eine flexible Verbindung im Befestigungsbereich 15 mit dem Spiegelträger 4 verbunden. Diese flexible Verbindung führt zu einer Entkoppelung zwischen dem Spiegelgehäuse 3 und dem Spiegelträger 4 bei Vibrationsanregungen, die beispielsweise durch Windkräfte hervorgerufen werden können. Hierbei ist eine einfache konstruktive Gestaltung des Spiegelkopfes 2 vorgesehen. Die beschriebenen Ausbildungen ermöglichen insbesondere eine kostengünstige Fertigung und Montage.

## Patentansprüche

1. Spiegelkopf eines Außenrückblickspiegels, eines Fahrzeuges mit einem Spiegelgehäuse und einem Spiegelträger (4) wobei das Spiegelgehäuse (3) an mindestens einem Befestigungspunkt (15) fest mit einem Spiegelträger (4) verbunden ist und dass das Spiegelgehäuse (3) im Bereich des Befestigungspunktes (15) einen von seiner Rückwand (5) abstehenden Befestigungsteil (14) aufweist, der zur Aufnahme wenigstens eines Verbindungselementes (21) dient, wobei der Befestigungspunkt (15), bezogen auf die Breitenerstreckung des Spiegelgehäuses (3), außermittig angeordnet ist **dadurch gekennzeichnet, dass** das Spiegelgehäuse (3) bei einer Kraftbeaufschlagung für seine Beweglichkeit gegenüber dem Spiegelträger (4) im wesentlichen einen Freiheitsgrad hat, so dass Spiegelgehäuse (3) und Spiegelträger (4) bei Vibrationsanregungen entkoppelt sind.

2. Spiegelkopf nach Anspruch 1, **dadurch gekennzeichnet, dass** der Befestigungsteil (14) zumindest teilweise hülsenförmig ausgebildet ist.

3. Spiegelkopf nach einem der Ansprüche 1 bis 2, **dadurch gekennzeichnet, dass** das Verbindungselement (21) eine Schraube ist, die stirnseitig in den Befestigungsteil (11) des Spiegelgehäuses (3) schraubbar ist.

4. Spiegelkopf nach einem der Ansprüche 1 bis 3, **dadurch gekennzeichnet, dass** das Verbindungselement (21) in einem Befestigungsteil (11) des Spiegelträgers (4) angeordnet ist.

5. Spiegelkopf nach Anspruch 4, **dadurch gekennzeichnet, dass** der spiegelträgerseitige Befestigungsteil (11) hülsenförmig ausgebildet ist.

6. Spiegelkopf nach Anspruch 4 oder 5, **dadurch gekennzeichnet, dass** der spiegelträgerseitige Befestigungsteil (1 1) an seinem der Rückwand (5) des Spiegelgehäuses (3) zugewandten Ende einen Boden (12) mit einer Durchtrittsöffnung (13) für das Verbindungselement (21) aufweist.

7. Spiegelkopf nach Anspruch 5, **dadurch gekennzeichnet, dass** der spiegelgehäuseseitige Befestigungsteil (14) am Boden (12) des spiegelträgerseitigen Befestigungsteiles (11) anliegt.

8. Spiegelkopf nach einem der vorherigen Ansprüche **dadurch gekennzeichnet, dass** das Spiegelgehäuse (3) unter Vorspannung am Spiegelträger (4) anliegt.

9. Spiegelkopf nach Anspruch 3, **dadurch gekennzeichnet, dass** der Kopf (22) der Schraube (21) Abstand vom Boden (12) des spiegelträgerseitigen Befestigungsteiles (11) hat, und dass die Schraube (21) im Bereich zwischen ihrem Kopf (22) und dem Boden (12) von wenigstens einem Vorspannelement (23, 28) umgeben ist.

10. Spiegelkopf nach Anspruch 9, **dadurch gekennzeichnet, dass** das Vorspannelement (23) eine Schraubendruckfeder ist.

11. Spiegelkopf nach Anspruch 9, **dadurch gekennzeichnet, dass** das Vorspannelement (28) eine elastisch verformbare Hülse ist.

12. Spiegelkopf nach einem der vorherigen Ansprüche, **dadurch gekennzeichnet, dass** der Befestigungspunkt (15) nahe am Boden des Spiegelgehäuses (3) vorgesehen ist.

## Claims

1. Mirror head of an exterior rearview mirror of a vehicle comprising a mirror housing and a mirror support (4), wherein the mirror housing (3) is connected to a mirror support (4) at least at one mounting point (15) in a solid manner, wherein the mirror housing (3) comprises a mounting component (14) protruding from its rear wall (5) in the area of the mounting point (15), wherein the mounting component is configured to receive at least one connection element (21), wherein the mounting point (15) has a none mid position related to the length of the mirror housing (3) **characterized in that** so that the mirror housing (3) has at least one degree of freedom for its movement relative to the mirror support (4) after a force impact, so that the mirror housing (3) and the mirror support (14) are decoupled at vibration excitation.

2. Mirror head according to claim 1, wherein the mounting component (14) is a at least partly forming a sleeve.

3. Mirror head according to one of the claims 1 to 2, **characterized in that** the connection element (21) is a screw, which can be screwed into the front side of the mounting component (11) of the mirror housing (3).

4. Mirror head according to one of the claims 1 to 3, **characterized in that** the connection element (21) is disposed in a mounting component (11) of the mirror support (4).

5. Mirror head according to claim 4 **characterized in that** mounting component (11) is a sleeve.

6. Mirror head according to claim 4 or 5, **characterized in that** the mounting component (11) on the mirror support side comprises a bottom (12) with a pass-through opening (13) for the connection element (21) at its end facing the rear wall (5) of the mirror housing (3).

7. Mirror head according to claim 5, **characterized in that** the mirror housing positioned mounting component (14) contacts the bottom (12) of the mounting component (11) of the mirror support.

8. Mirror head according to one of the previous claims, **characterized in that** the mirror housing (3) contacts pre-loaded the mirror support (4).

9. Mirror head according to claim 3, **characterized in that** the head (22) of the screw (21) is space apart from the bottom (12) of mounting component (11) on the mirror support side, and the screw (21) is surrounded by at least one preload element (23, 28) in the area between its head (22) and the bottom (12)

10. Mirror head according claim 9, **characterized in that** the compressing element (23) is a helical compression spring.

11. Mirror head according to claim 9, **characterized in that** the preload element (28) is an elastically deformable sleeve.

12. Mirror head according to one the previous claims, **characterized in that** the mounting point (15) is intended near the bottom of the mirror housing (3).

## Revendications

1. Tête de miroir d'un rétroviseur extérieur d'un véhicule comprenant un logeaient de miroir et un support en miroir (4), dans laquelle le logement de miroir (3) est relié solidement en au moins un point de fixation (15) à un support de miroir (4) et le logement de miroir (3) présente dans la légion du point de fixation (15) une pièce de fixation (14) dépassant de sa paroi arrière (5), laquelle pièce de fixation sert à la réception d'au moins un élément de connexion (21), le point de fixation (15) étant dispose de manière excentrée par rapport à l'étendue en largeur du logement de miroir (3), **caractérisée en ce que** le logement de miroir (3) possède, en cas de sollicitation en force pour sa mobilité par rapport au support de miroir (4), essentiellement un degré de liberté, de sorte que logement de miroir (3) et support de miroir (4) sont découplés en cas de stimulations vibratoires.

2. Tête de miroir selon la revendication 1, **caractérisée en ce que** la pièce de fixation (14) est réalisée au moins partiellement en forme de douille.

3. Tête de miroir selon l'une quelconque des revendications 1 à 2, **caractérisée en ce que** 1'élément de connexion (21) est une vis qui peut être vissée côté frontal dans la pièce de fixation (11) du logement de miroir (3).

4. Têtue de miroir selon l'une quelconque des revendications 1 à 3, **caractérisée en ce que** l'élément de connexion (21) est disposé dans une pièce de fixation (11) du support de miroir (4).

5. Tête de miroir selon la revendication 4, **caractérisée en ce que** la pièce de fixation (11) du côté du support de miroir est réalisée en forme de douille.

6. Tète de miroir selon la revendication 4 ou 5, **caractérisée en ce que** la pièce de fixation (11) du côté du support de miroir présente à son extrémité tournée vers la paroi arrière (5) du logement de miroir (3) un fond (12) avec une ouverture de passage (13) pour l'élément de connexion (21).

7. Tête de miroir selon la revendication 5, **caractérisée en ce que** la pièce de fixation (14) du côté du logement de miroir repose sur le fond (12) de la pièce de fixation (11) du côté du support de miroir.

8. Tête de miroir selon l'une quelconque des revendications précédentes, **caractérisée en ce que** le logement de miroir (3) repose sur le support, de miroir (4) avec une précontrainte.

9. Tête de miroir selon la revendication 3, **caractérisée en ce que** la tête (22) de la vis (21) a un écart par rapport au fond (12) de la pièce de fixation (11) du côté du support de miroir, et que la vis (21) est entourée dans la région entre sa tête (22) et le fond (12) d'au moins un élément de précontrainte (23, 28).

10. Tête de miroir selon la revendication 9, **caractérisée en ce que** l'élément de précontrainte (23) est un ressort cylindrique de compression.

11. Tête de miroir selon la revendication 9, **caractérisée en ce que** l'élément de précontrainte (28) est une douille déformable élastiquement.

12. Tête de miroir selon l'une quelconque des revendications précédentes, **caractérisée en ce que** le point de fixation (15) est préau près du fond du logement de miroir (3).
